# EUROPÄISCHE PATENTSCHRIFT

(11) **EP 0 612 485 B1**
(45) Veröffentlichungstag und Bekanntmachung des Hinweises auf die Patenterteilung: **26.04.1995**
(21) Anmeldenummer: 93109745.5
(22) Anmeldetag: 18.06.1993
(51) Int. Cl.: A44B 18/00

(54) **Haftkörper zum Einschäumen in einen Schaumstofformling**
Hook body, embedded into a molded foam part
Elément d'accrochage à intégrer dans un dispositif de surmoulage pour moussage

(30) Priorität: 26.02.1993 DE 9302809 U
(43) Veröffentlichungstag der Anmeldung: 31.08.1994
(73) Patentinhaber: GOTTLIEB BINDER GMBH & Co., 71088 Holzgerlingen (DE)
(72) Erfinder: Hammer, Pavel, D-7406 Mössingen (DE)
(74) Vertreter: Patentanwälte Bartels und Partner

(56) Entgegenhaltungen:
- EP-A- 0 168 241
- EP-A- 0 439 969
- WO-A-92/19119
- FR-A- 2 047 243

## Beschreibung

Die Erfindung betrifft einen Haftkörper zum Einschäumen in einen Schaumstofformling, mit einem Haftverschlußteil, der an seiner Vorderseite Verhakungselemente aufweist, einem Verankerungsteil, der an der Rückseite des Haftverschlußteiles angebracht und zur Verankerung des Haftkörpers in die Oberfläche des Schaumstofformlings einschäumbar ist, sowie einem die Verhakungselemente vollflächig bedeckenden und dieselben während des Schäumens des Formlinges in einer Form gegen ein Eindringen von Schaum abdichtenden Deckelement, das durch eine Lage aus einer Kunststoff-Dichtmasse gebildet ist, die an der Vorderseite des Haftkörpers den Haftverschlußteil in der Weise bedeckt, daß zumindest die äußeren Enden der Verhakungselemente in der Dichtmasse eingebettet sind, und die zum Freilegen der Verhakungselemente und von diesen abziehbar ist.

Haftkörper dieser Art sind aus der PCT-Veröffentlichung WO 92/19119 bekannt. Mit ihrem Haftverschlußteil bilden sie die eine Verschlußhälfte eines Haftverschlusses, die durch Andrücken ihrer Vorderseite an die Vorderseite einer zweiten Verschlußhälfte sich mit dieser lösbar verbindet. Die lösbare Verbindung wird dadurch erreicht, daß die Vorderseite der einen Hälfte mit einer Vielzahl von Verhakungselementen in Form von Haken oder Pilzen und die Vorderseite der anderen Hälfte mit einer Vielzahl von Verhakungselementen in Form von Schlaufen versehen ist. Beim Aneinanderdrücken der beiden Vorderseiten kommen die Verhakungselemente der eine Hälfte mit den Verhakungselementen der anderen Hälfte in Eingriff und ergeben so die lösbare Verbindung.

Die oben genannten Haftkörper können dazu benutzt werden, um die Oberfläche eines Schaumstofformlings an bestimmten Stellen mit einer Fläche zu versehen, die mit Verhakungsmitteln versehen ist. Dadurch kann mit dem Schaumstofformling ein anderer Körper lösbar verbunden werden, der an seiner Oberfläche eine Fläche aufweist, die mit Verhakungselementen versehen ist, die zu den Verhakungselementen des Schaumstofformlings komplementär sind. Dies ist zum Beispiel dann der Fall, wenn der Schaumstofformling einen Sitz, eine Sitzlehne oder eine Kopfstütze bildet, mit der ein Bezug lösbar verbindbar ist. In einem solchen Fall ist es zweckmäßig, am Formling die Haken oder pilzförmigen Verhakungselemente vorzusehen, so daß es bereits genügt, einen gestrickten Bezug zu verwenden, dessen Schlaufen sich in den Verhakungselementen des Schaumstofformlings verhaken. Der Bezug kann aber auch mit der anderen Hälfte des Haftverschlusses verbunden sein, bei dem die Verhakungselemente als Schlaufen ausgebildet sind.

Ein anderes Anwendungsgebiet der eingangs genannten Haftkörper sind zum Beispiel Kapselungen zum Befestigen von Isolier- und Schalldämmstoffen in dem Motorraum eines Kraftfahrzeuges oder aus Schaumstoff bestehende Wandverkleidungen zum lösbaren Befestigen von tapetenartigen Bezügen oder dergleichen.

Bei den vorstehend erwähnten, bekannten Haftkörpern sind als Dichtmassen, die die Verhakungselemente an der Vorderseite des Haftverschlußteiles während des Schäumens des Formlinges in der Form gegen das Eindringen von Schaum schützen, Elastomere vorgesehen, deren jeweilige viskose Vorstufe auf die Verhakungselemente aufgetragen wird, um sodann durch eine Wärmebehandlung zum Elastomer vernetzt oder vulkanisiert zu werden.

Der Erfindung liegt die Aufgabe zugrunde, einen Haftkörper der in Betracht stehenden Art zu schaffen, der besonders einfach, wirtschaftlich und umweltschonend herstellbar ist.

Diese Aufgabe löst erfindungsgemäß ein Haftkörper der eingangs genannten Art, der dadurch gekennzeichnet ist, daß als Dichtmasse ein unvernetztes thermoplastisches Kunststoffmaterial vorgesehen ist, das nach dem Abziehen einschmelzbar und für denselben Zweck wiederverwendbar ist.

Die Verwendung unvernetzten thermoplastischen Kunststoffmaterials, beispielsweise synthetischen Kautschuks, als Deckmasse führt nicht nur zu der erstrebten wirtschaftlichen Herstellungsweise durch Wegfall des Arbeits- und Kostenaufwandes für eine vernetzende oder vulkanisierende Wärmebehandlung, sondern erbringt den weiteren Vorteil, daß die nach dem Schäumen des Formlinges abgezogenen Deckelemente ohne weiteres einschmelzbar und für ihre neuerliche Verwendung als Dichtmasse nutzbar sind. Neben der dadurch erreichten Wirtschaftlichkeit gestaltet sich die Herstellung aufgrund des praktisch 100%igen Recycling und der damit erreichten Abfallvermeidung besonders umweltschonend.

Das Deckelement kann auch die zusätzliche Funktion der Lagesicherung des Haftkörpers in der Schäumform während des Schäumvorganges des Formlings übernehmen. Die Lage der Dichtmasse bildet gewissermaßen einen Vollkörper an der Vorderseite des Haftkörpers. Dieser kann als Paßkörper dienen, der in einer in der Innenwandung der Schäumform ausgearbeiteten Nut passend aufnehmbar ist, so daß der Haftkörper während des Schäumvorgangs formschlüssig in seiner Lage gesichert ist. Dadurch werden die üblicherweise erforderlichen magnetischen Haltemittel oder Klebemaßnahmen für die Lagesicherung des Haftkörpers in der Form überflüssig, so daß sich eine weitere sehr bedeutende Vereinfachung und Kostensenkung ergibt.

Eine besonders sichere Lagefixierung in der Nut der Schäumform ergibt sich bei einem Ausführungsbeispiel, bei dem zur Bildung eines schwalbenschwanzförmigen Querschnitts des aus Haftkörper und Dichtmasse gebildeten Verbundes die Längsränder desselben schräg verlaufen. Bei solcher Querschnittsform ist der Haftkörper in einer Nut der Formwandung, die einen entsprechenden schwalbenschwanzförmigen lichten Querschnitt besitzt, besonders sicher gehalten.

Unabhängig von der Querschnittsform des Haftkörpers und der entsprechenden Nut in der Formwandung können die Abmessungen bezüglich der Tiefe der Nut und der Dicke der Lage aus der Dichtmasse so gewählt werden, daß bei in die Nut eingelegtem Haftkörper die Rückseite des Haftverschlußteiles mit der Innenseite der Schäumform bündig abschließt oder etwas in den Hohlraum der Form hineinragt. Bei einer Nut geringer Tiefe, die durch seitliche Halteleisten begrenzt ist, die in den Hohlraum der Form vorspringen, kann auch ein bündiges Abschließen der Haftverschlußoberfläche, d.h. der äußeren Enden der Verhakungselemente, mit der Forminnenwand erreicht werden.

Nachstehend ist die Erfindung anhand von in der Zeichnung dargestellten Ausführungsbeispielen im einzelnen erläutert.

Es zeigen:
- Fig. 1: eine gegenüber der natürlichen Größe in vergrößertem Abbildungsmaßstab und stark schematisch vereinfacht gezeichnete Schnittdarstellung eines Teiles einer Schäumformwandung mit in eine Nut derselben eingesetztem Haftkörpers;
- Fig. 2: eine der Fig. 1 ähnliche Schnittdarstellung mit einem Haftkörper gemäß einem zweiten Ausführungsbeispiel und
- Fig. 3: eine der Fig. 1 entsprechende Darstellung, wobei jedoch der Haftkörper in eine mit Halteleisten versehene Nut der Schäumformwandung eingesetzt ist.

Die Figuren zeigen einen Eckbereich einer Form, deren Wandung mit 1 bezeichnet ist und die zum Schäumen eines Formlinges mit Polyurethanschaum vorgesehen ist. Bei dem Formling handelt es sich beispielsweise um den Kern einer Kopfstütze für einen Fahrzeugsitz. An der Innenseite der Wandung 1 der Form ist eine Nut 3 eingefräst, in der ein als Ganzes mit 5 bezeichneter Haftkörper während des Schäumvorganges aufgenommen ist. Der Haftkörper 5 weist einen Haftverschlußteil 7 auf, der durch einen Abschnitt eines Haftbandes gebildet ist, das über seine ganze Länge und von Längsrand zu Längsrand durchgehend an seiner Vorderseite mit Verhakungselementen 9 besetzt ist, die in der Figur als Häkchen dargestellt sind. Diese Darstellung ist lediglich beispielhaft gewählt. In der bei Verschlußhälften für Haftverschlüsse üblichen Weise kann es sich bei den Verhakungselementen 9 um vorstehende, aufgeschnittene Schlaufen, pilzartige Vorsprünge, geschlossene Schlaufen oder dergleichen handeln.

An der den Verhakungselementen 9 abgekehrten Rückseite des Haftverschlußteiles 7 ist ein Vlies 11 durch Ankleben befestigt. Dieses dient als Verankerungshilfe zwischen der Rückseite des Haftkörpers und dem Schaum. Anstelle des Vlieses 11 könnte auch ein Filz angeklebt sein. Es ist auch möglich, statt dieser textilen Materialien einen auf die zu verbindenden Teile abgestimmten Haftvermittler als Verankerungshilfe aufzubringen.

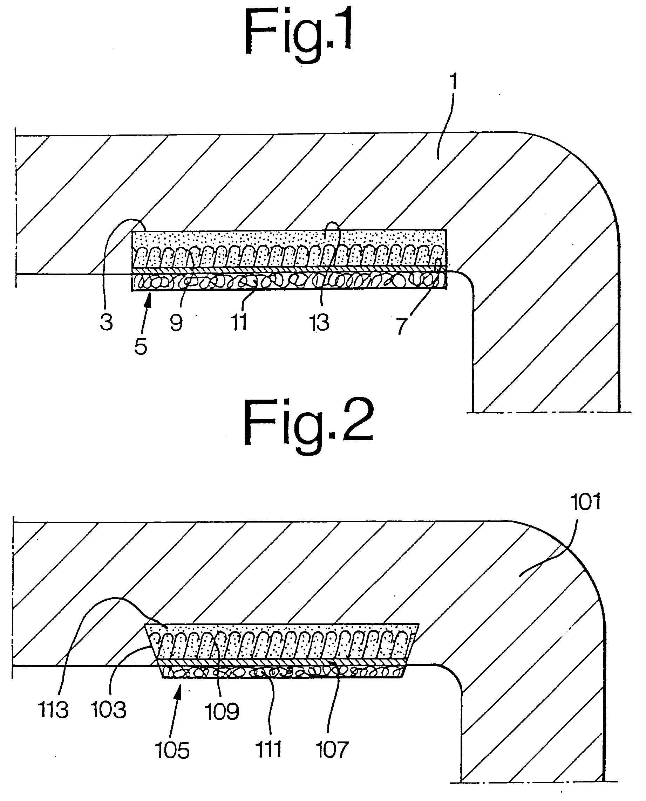

Auf der Vorderseite des Haftverschlußteiles 7 ist eine Lage aus einer Dichtmasse 13 aufgetragen. Wie Fig. 1 zeigt, ist die Dichtmasse 13 in solcher Schichtstärke aufgetragen, daß die Verhakungselemente 9 vollständig in der Dichtmasse eingebettet sind und diese daher während des Ausschäumens des Formlings in der Form vor einem Zutritt des anfänglich noch flüssigen Schaums geschützt sind. Beim Ausschäumen tritt der Schaum daher lediglich zwischen das Fasermaterial des den Verankerungsteil bildenden, rückseitigen Vlieses 11 ein, so daß es zu einer sicheren Verankerung des Haftkörpers 5 an der Oberfläche des ausgeschäumten Formlinges kommt.

Nach Herausnehmen aus der Form und dem Abziehen der Dichtmasse 13 von der Vorderseite des Haftkörpers 5 sind daher die Verhakungselemente 9 frei von jedweden Verklebungen durch eingetretenen Schaum, so daß eine einwandfreie Verschlußhälfte zur Bildung eines gewünschten Haftverschlusses mit einer zugeordneten Verschlußhälfte zur Verfügung steht, die beispielsweise an einem Überzug vorgesehen oder durch das Gewebe eines Überzugs selbst gebildet sein kann. Als abziehfähige Dichtmasse ist thermoplastisches Kunststoffmaterial geeignet, beispielsweise synthetischer Kautschuk. Das Material der Dichtmasse kann, da es in unvernetztem Zustand ist, nach dem Abziehen eingeschmolzen und für denselben Zweck wiederverwendet werden (100% Recycling).

Wie aus den Figuren ersichtlich ist, bildet die Dichtmasse 13 zusammen mit dem Haftverschlußteil 7 und dem als Verankerungsteil dienenden Vlies 11 einen Verbundkörper, dessen Querschnitt demjenigen der Nut 3 in der Wandung 1 der Schäumform entspricht. Der Haftkörper 5 ist deshalb durch formschlüssige Aufnahme in der Nut 3 während des Ausschäumvorganges sicher festgelegt, ohne daß irgendwelche zusätzlichen Maßnahmen zur Lagesicherung ergriffen werden müßten, wie dies bei üblichen Haftkörpern der Fall ist, wo Magnetverbinder, Klebstoffauftrag oder dergleichen angewendet werden, um den Haftkörper während des Ausschäumvorganges an der Innenwandung der Form zu sichern. Bei dem erfindungsgemäßen Haftkörper 5 bildet die Dichtmasse 13 gewissermaßen einen "Paßkörper", der in der Nut 3 der Wandung 1 lösbar festlegbar ist.

Bei dem in Fig. 2 gezeigten Ausführungsbeispiel, bei dem Teile, die solchen des Ausführungsbeispiels von Fig. 1 entsprechen, mit dem demgegenüber um 100 vergrößerten Bezugszeilen bezeichnet sind, ist der Haftkörper 105 an seinen seitlichen Längsrändern, die bei der Herstellung mittels Wasserstrahl oder Messern zugeschnitten sind, abweichend vom erstbeschriebenen Ausführungsbeispiel nicht senkrecht zur Haftkörperebene beschnitten, sondern schräg zugeschnitten, so daß sich ein schwalbenschwanzförmiger Querschnitt des Haftkörpers 105 ergibt. Bei entsprechend schwalbenschwanzförmig gefräster Nut 113 in der Wandung 101 der Form ergibt sich dadurch eine besonders zuverlässige Lagesicherung des Haftkörpers 105 in der Nut 103.

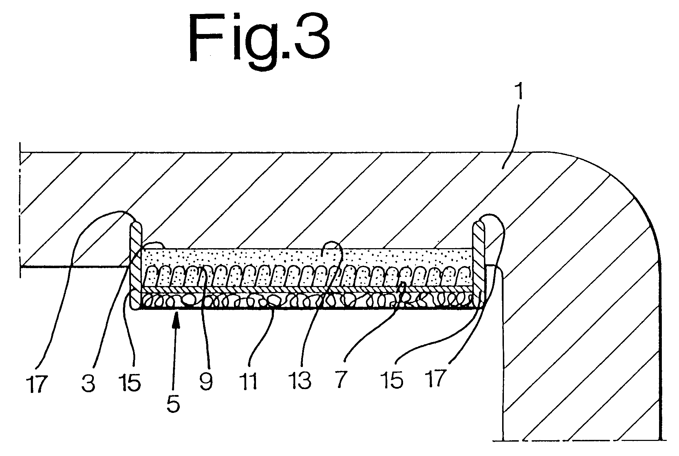

Durch Wahl der Tiefe der Nut 3, 103 und der Höhe der Lage der Dichtmasse 13, 113 hat man es in der Hand, den Haftkörper 5, 105 an der Formwand so anzuordnen, daß die Rückseite des Haftverschlußtieles 7, 107 im wesentlichen bündig mit der Innenseite der Wandung 1 der Form abschließt, wie es in Fig. 1 und 2 gezeigt ist, oder daß der Haftkörper 5 etwas in den Hohlraum der Form hineinragt, wie es in Fig. 3 gezeigt ist.

Bei dieser Anordnung hat die Nut 3 in der Formwandung 1 eine verhältnismäßig geringe Tiefe, sodaß die Verhakungselemente 9 des in die Nut 3 eingesetzten Haftkörpers 5 mit ihren oberen Enden im wesentlichen bündig mit der Innenseite der Wandung 1 sind. Um den sicheren Sitz des Haftkörpers 5 in der Nut 3 trotz deren geringer Tiefe zu gewährleisten, sind die Längsränder der Nut 3 durch Halteleisten 15 verlängert, die in eingefrästen Schlitzen 17 der Wandung 1 sitzen und in den Innenraum der Form ragen, siehe Fig. 3.

## Patentansprüche

1. Haftkörper zum Einschäumen in einen Schaumstofformling mit:
einem Haftverschlußteil (7; 107), der an seiner Vorderseite Verhakungselemente (9; 109) aufweist,
einem Verankerungsteil (11; 111), der an der Rückseite des Haftverschlußteiles (7; 107) angebracht und zur Verankerung des Haftkörpers (5; 105) in die Oberfläche des Schaumstofformlings einschäumbar ist, sowie
einem die Verhakungselemente (9; 109) vollflächig bedeckenden und dieselben während des Schäumens des Formlinges in einer Form gegen ein Eindringen von Schaum abdichtenden Deckelement, das durch eine Lage aus einer Kunststoff- Dichtmasse (13; 113) gebildet ist, die an der Vorderseite des Haftkörpers (5; 105) den Haftverschlußteil (7; 107) in der Weise bedeckt, daß zumindest die äußeren Enden der Verhakungselemente (9; 109) in der Dichtmasse (13; 113) eingebettet sind, und die zum Freilegen der Verhakungselemente (9; 109) von diesen abziehbar ist,
dadurch gekennzeichnet, daß als Dichtmasse (13; 113) ein unvernetztes thermoplastisches Kunststoffmaterial vorgesehen ist, das nach dem Abziehen einschmelzbar und für denselben Zweck wiederverwendbar ist.

2. Haftkörper nach Anspruch 1, dadurch gekennzeichnet, daß als thermoplastisches Kunststoffmaterial für die Dichtmasse (13; 113) ein synthetischer Kautschuk vorgesehen ist.

3. Haftkörper nach Anspruch 1 oder 2, dadurch gekennzeichnet, daß sich die Dichtmasse (13; 113), von Längsrand zu Längsrand durchgehend, über die gesamte Fläche des Haftkörpers (5; 105) erstreckt und während des Schäumens des Formlinges in der Form in einer vertieften Aufnahme (3; 103) derselben aufnehmbar ist, um durch Formschluß eine Befestigung des Haftkörpers (5; 105) in der Form zu bilden.

4. Haftkörper nach Anspruch 3, dadurch gekennzeichnet, daß zur Bildung eines schwalbenschwanzförmigen Querschnitts des aus Haftkörper (105) und Dichtmasse (113) gebildeten Verbundes die Längsränder desselben schräg verlaufen.

## Claims

1. Adhering body for incorporation by foaming into a moulded foam part, having:
an adhering fastening part (7; 107) which has hooking elements (9; 109) on its front side;
an anchoring part (11; 111) which is attached to the rear side of the adhering fastening part (7; 107) and can be incorporated by foaming into the surfact of the moulded foam part in order to anchor the adhering body (5; 105); and
a cover element which covers the entire face of the hooking elements (9; 109) and seals those elements against the ingress of foam during the foaming of the moulded part in a mould and which is formed by a layer of a plastics sealing composition (13; 113) which, on the front side of the adhering body (5; 105), covers the adhering fastening part (7; 107) in such a manner that at least the outer ends of the hooking elements (9; 109) are embedded in the sealing composition (13; 113) and which can be pulled off the hooking elements (9; 109) in order to expose them; characterised in that an uncrosslinked thermoplastic synthetic material which, after being pulled off, can be melted down and reused for the same purpose is provided as the sealing composition (13; 113).

2. Adhering body according to Claim 1, characterised in that a synthetic rubber is provided as the thermoplastic synthetic material for the sealing composition (13; 113).

3. Adhering body according to Claim 1 or 2, characterised in that the sealing composition (13; 113), which is continuous from longitudianl edge to longitudinal edge, extends over the entire face of the adhering body (5; 105) and, during the foaming of the moulded part in the mould, can be accomodated in a recessed receiving member (3; 103) of the mould in order to secure the adhering body (5; 105) in the mould by positve locking.

4. Adhering body according to Claim 3, characterised in that, in order to form a dovetail-shaped cross-section of the joint formed by the adhering body (105) and the sealing composition (113), the longitudinal edges of the joint are inclined.

## Revendications

1. Elément d'accrochage destiné à être intégré par moussage dans une pièce moulée en mousse, comprenant:
une partie de fermeture adhésive (7; 107) qui présente sur sa face frontale des éléments d'accrochage (9; 109),
une partie d'ancrage (11; 111) qui est rapportée sur la face arrière de la partie de fermeture adhésive (7; 107) et peut être intégrée par moussage, pour l'ancrage de la pièce d'accrochage (5; 105), dans la surface de la pièce moulée en mousse,
ainsi qu'un élément de recouvrement recouvrant sur toute la surface les éléments d'accrochage (9; 109) et rendant ceux-ci étanches à une pénétration de mousse pendant le moussage de la pièce moulée dans un moule, élément qui est formé d'une couche de masse d'étanchéité (13; 113) en matière synthétique qui recouvre la partie de fermeture adhésive, à l'avant de l'élément d'accrochage (5; 105), de telle manière qu'au moins les extrémités extérieures des éléments d'accrochage (9; 109) sont enrobées dans la masse d'étanchéité (13; 113), et qui, pour dégager les éléments d'accrochage (9; 109), est rétractible de ceux-ci,
caractérisé en ce que, comme masse d'étanchéité (13; 113), il est prévu un matériau synthétique thermoplastique non-réticulé, qui peut être fondu après le retrait et peut être réutilisé dans le même but.

2. Elément d'accrochage selon la revendication 1, caractérisé en ce qu'un caoutchouc synthétique est prévu comme matériau synthétique thermoplastique pour la masse d'étanchéité (13; 113).

3. Elément d'accrochage selon la revendication 1 ou 2, caractérisé en ce que la masse d'étanchéité (13; 113) s'étend, en continu d'un bord longitudinal à l'autre, sur toute la surface du corps d'accrochage (5; 105) et peut, pendant le moussage de la pièce moulée dans le moule, se loger dans un renfoncement de celui-ci, pour conduire, par fermeture du moule, à une consolidation du corps d'accrochage (5; 105) dans le moule.

4. Corps d'accrochage selon la revendication 3, caractérisé en ce que, pour obtenir une section en forme de queue d'aronde pour l'ensemble formé par le corps adhésif (105) et la masse d'étanchéité (113), les bords longitudinaux de celui-ci s'étendent à l'oblique.
